# EUROPÄISCHE PATENTANMELDUNG

(11) **EP 3 108 756 A1**
(43) Veröffentlichungstag der Anmeldung: **28.12.2016**
(21) Anmeldenummer: 16176348.7
(22) Anmeldetag: 27.06.2016
(51) Int. Cl.: A23P 30/40, A47J 43/12

(54) **SAHNEMASCHINE**

(30) Priorität: 26.06.2015 DE 202015103368 U
(71) Anmelder: Dr. Dieter Vaihinger GmbH & Co. KG, 65520 Bad Camberg (DE)
(72) Erfinder: REHBEIN, Bernd, 65520 Bad Camberg (DE)
(74) Vertreter: Kugler, Jörg

(57) **Zusammenfassung**

Sahnemaschine (2) mit einem Auslauf (8) für Schlagsahne und mit einer Garniereinrichtung (12) zum Aufbringen mindestens eines Farb-/ Geschmacksproduktes auf die Schlagsahne.

## Beschreibung

Bei Softeisprodukten ist es bekannt, die jeweilige Eisportion vor dem Servieren durch Zugabe von zähflüssigen Massen wie beispielsweise Fruchtmark oder speziellen Saucen zu dekorieren bzw. zu garnieren. Hierbei werden der Oberfläche des Eisproduktes Farb-/ Geschmacksprodukte der genannten Art von außen zugeführt, um dadurch eine attraktive Gestaltung der Speiseeisportion zu erreichen, insbesondere in Form von Streifenmustern. Man spricht in diesem Zusammenhang auch von einem Topping, welches auf das Eisprodukt aufgebracht wird.

Bei Schlagsahne ist ein derartiges Topping bislang nicht sehr weit verbreitet. In manchen Eisdielen ist zu sehen, dass per Hand ein Farb-/ Geschmacksprodukt aus einer Flasche auf die geschlagene Sahne aufgebracht und diese damit dekoriert wird. Das ist umständlich, zeitintensiv und führt zu Unterschieden im Aussehen und in der Qualität des Sahneproduktes.

Aufgabe der Erfindung ist es, bei der Garnierung / Dekoration von Schlagsahne mit Farb-/ Geschmacksprodukten Zeit und Personal zu sparen und ein reproduzierbares Gesamtprodukt zu ermöglichen, welches servierbereit portioniert ist.

Die Aufgabe wird erfindungsgemäß gelöst durch eine Sahnemaschine mit den Merkmalen des Anspruchs 1.

Die Erfindung beruht auf der Idee, das Dekorieren der Sahne mit Topping-Produkten zu automatisieren, indem geeignete apparative Mittel in eine Sahnemaschine / einen Sahneautomaten integriert werden.

Vorteilhafte Ausgestaltungen und Weiterentwicklungen der grundlegenden Idee sind Gegenstand der Unteransprüche und der nachfolgenden detaillierten Beschreibung eines Ausführungsbeispiels anhand von Figuren. Darin zeigen:
- FIG. 1: eine Sahnemaschine mit einer Garniereinrichtung in einer perspektivischen Ansicht,
- FIG. 2: einen Vorratsbehälter der Garniereinrichtung gemäß FIG. 1 in einer ersten perspektivischen Ansicht,
- FIG. 3: den Vorratsbehälter gemäß FIG. 2 in einer zweiten perspektivischen Ansicht,
- FIG. 4: den Vorratsbehälter gemäß FIG. 2 und 3 mit zugehörigen Komponenten in perspektivischer Ansicht,
- FIG. 5: einen Verschlussdeckel des Vorratsbehälters in perspektivischer Ansicht,
- FIG. 6: den auf dem Vorratsbehälter aufliegenden Verschlussdeckel im Querschnitt,
- FIG. 7: eine Draufsicht auf den Vorratsbehälter mit dem Verschlussdeckel im entriegelten Zustand,
- FIG. 8: eine Draufsicht auf den Vorratsbehälter mit dem Verschlussdeckel im verriegelten Zustand,
- FIG. 9: einen Längsschnitt durch eine Ringdüse der Garniereinrichtung gemäß FIG. 1 mit eingezeichneten Flusslinien,
- FIG. 10: denselben Längsschnitt wie in FIG. 9 mit weiteren Flusslinien,
- FIG. 11: einen Längsschnitt durch die auf eine Garniertülle der Sahnemaschine gemäß FIG. 1 geschobene Ringdüse gemäß FIG. 9 und 10,
- FIG. 12: eine Draufsicht von unten auf die Anordnung gemäß FIG. 11,
- FIG. 13: die Sahnemaschine gemäß FIG. 1 mit einer Abdeckung über der Garniereinrichtung,
- FIG. 14: die Vorder-/ Seitenansicht einer weiteren Ausführungsform einer Sahnemaschine mit einer Garniereinrichtung,
- FIG. 15: eine Seitenansicht der Sahnemaschine gemäß FIG. 14,
- FIG. 16: einen Längsschnitt durch eine alternative Variante einer Ringdüse, und
- FIG. 17: eine zugehörige Draufsicht auf die Ringdüse gemäß FIG. 16 von un-ten.

Gleiche oder gleichwirkende Teile sind in allen Figuren mit denselben Bezugszeichen versehen.

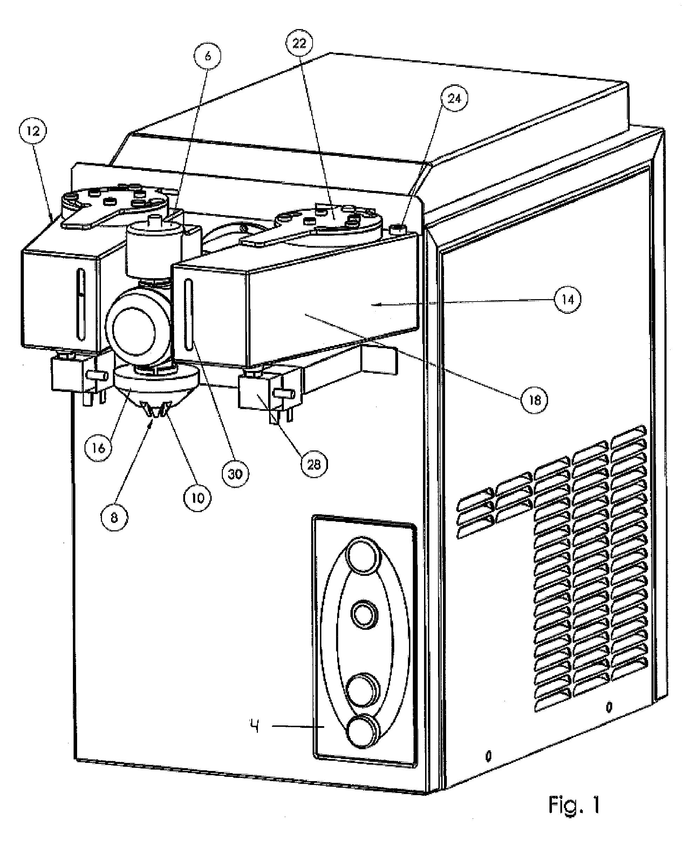

FIG. 1 zeigt in perspektivischer Ansicht eine Sahnemaschine 2, die mit einer Zusatzeinrichtung zur Erzeugung von Dekorstreifen auf der entnommenen Schlagsahne ausgerüstet ist.

Die Sahnemaschine 2 selber ist von konventioneller Bauart, etwa wie in EP 2 227 944 A2 beschrieben. Die Einzelheiten des Aufbaus und die Funktionsweise der einzelnen Komponenten sind hier nicht von Interesse. Im vorliegenden Zusammenhang kommt es lediglich darauf an, dass bei Betätigung des Entnahmetasters am Bedienfeld 4 das vorzugsweise als Magnetventil 6 ausgebildete Entnahmeventil öffnet und die servierfertig aufbereitete Schlagsahne durch den Auslauf 8 mit der Garniertülle 10 strömt.

Die Zusatzeinrichtung oder Garniereinrichtung 12 umfasst hier im Ausführungsbeispiel zwei bau- und funktionsgleiche Vorratseinheiten 14 in symmetrischer Anordnung an der Gehäuseaußenseite der Sahnemaschine 2, nämlich einmal links und einmal rechts des Auslaufs 8. Jede der beiden Vorratseinheiten 14 enthält im betriebsbereiten Zustand ein auch als Topping oder Garnierung bezeichnetes Farb-/Geschmacksprodukt (kurz: Produkt), welches mit Hilfe einer gemeinsamen Applikationsdüse 16 in Streifenform auf die ausströmende Schlagsahne aufgetragen wird, vergleichbar etwa mit den Streifen in einer Zahnpasta oder bei einigen Softeisprodukten. In alternativen Ausgestaltungen können mehr als zwei oder nur eine Vorratseinheit 14 vorgesehen sein, was die Anzahl der applizierbaren verschiedenartigen Streifen bestimmt. In alternativen Ausgestaltungen können die Vorratseinheiten 14 auch seitlich / rückwärtig / oben am Gehäuse oder innerhalb des Gehäuses der Sahnemaschine 2 angeordnet sein oder können als externe Vorratsbehälter konzipiert sein, welche nicht an der Sahnemaschine 2 angebracht sein müssen.

Rein beispielhaft kann eine der beiden Vorratseinheiten 14 dazu vorgesehen sein, im Zusammenwirken mit der Applikationsdüse 16 Dekorstreifen auf der Basis von Schokoladensauce (braun) auf die Schlagsahne aufzubringen, und die andere Dekorstreifen auf der Basis von Erdbeersauce (rot). Selbstverständlich können auch andere Farb-/Geschmacksprodukte, etwa Fruchtmark-Saucen oder spezielle Topping-Saucen verwendet werden. Dabei ist sicherzustellen, dass das Produkt eine hinreichend ausgeprägte Fließeigenschaft bzw. Viskosität besitzt, damit der Druck des zugehörigen Kompressors oder der (Saug-) Druck der zugehörigen Pumpe zur Förderung / zum Transport nicht unangemessen hoch eingestellt werden muss (siehe unten). Das Produkt darf aber auch nicht zu flüssig sein, da sonst die Dekorstreifen auf der Schlagsahne verlaufen.

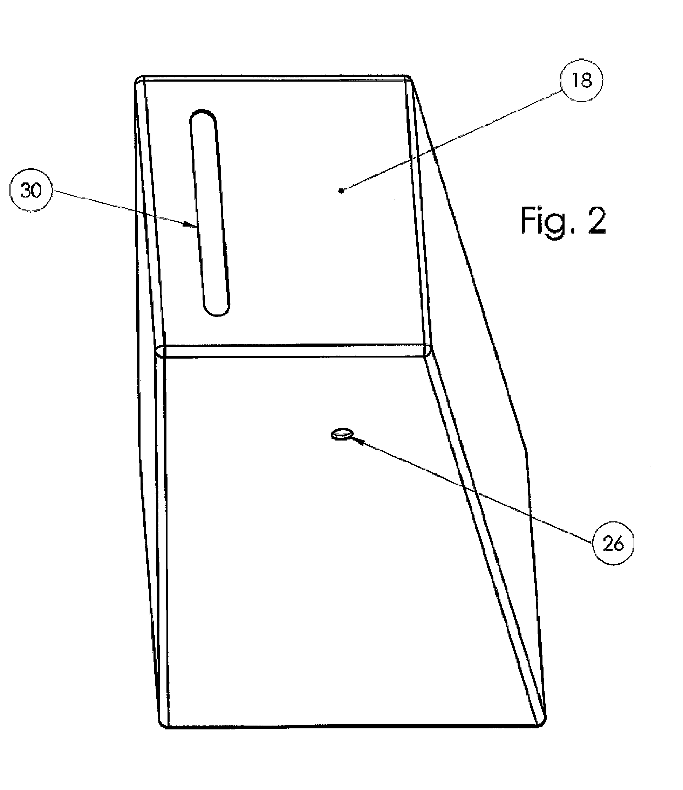

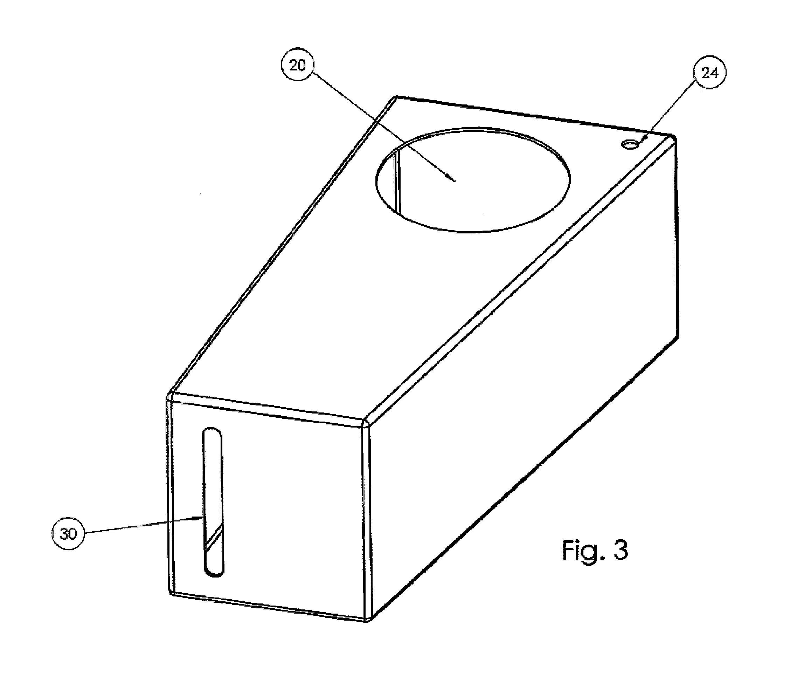

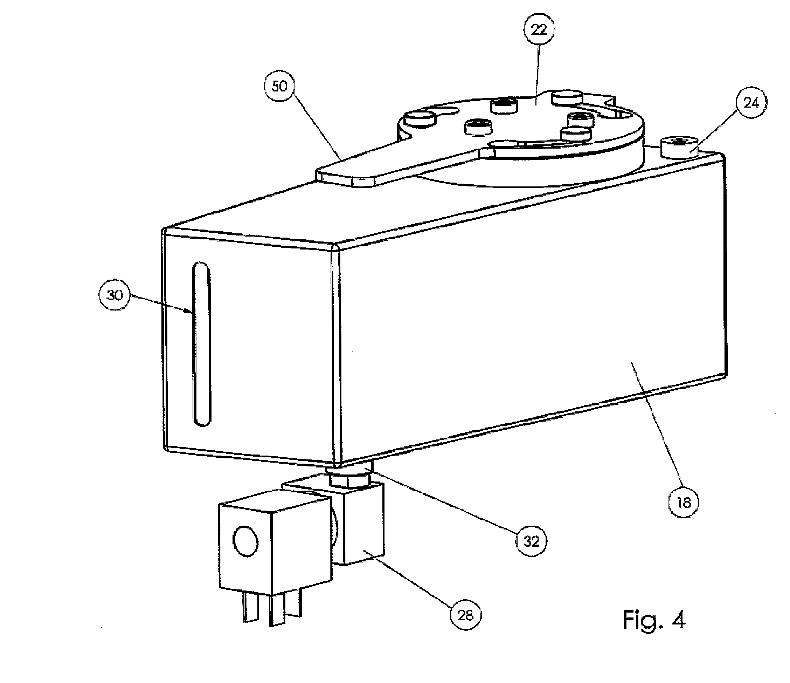

Zur Verwirklichung des genannten Ziels umfasst die jeweilige Vorratseinheit 14 einen druckdicht gegenüber der Umgebung verschließbaren Vorratsbehälter 18 für das zu verarbeitende Produkt. Der Vorratsbehälter 18 ist in FIG. 2 und FIG. 3 in zwei verschiedenen Ansichten separat dargestellt und in FIG. 4 zusammen mit zugehörigen Komponenten. Durch eine in der Gehäusedecke angeordnete Nachfüllöffnung 20, die mit Hilfe eines Verschlussdeckels 22 druckdicht verschließbar ist, kann vor der Inbetriebnahme das Produkt bedarfsweise nachgefüllt werden.

Über einen Druckluftanschluss 24 und eine daran angeschlossene Druckluftleitung (nicht dargestellt) ist der Vorratsbehälter 14 mit einem zugehörigen Kompressor verbunden, der während des Betriebs den Innenraum des Vorratsbehälters 14 mit dem darin enthaltenen Produkt unter Druck setzt. Die Druckluft dient als Treibfluid, um das Produkt durch den Auslass 26 zu fördern, wenn das darin angeordnete, vorzugsweise als Magnetventil 28 ausgebildete Entnahmeventil geöffnet ist.

Das Öffnen des Magnetventils 28 geschieht über eine entsprechende Benutzereingabe am Bedienfeld 4 und ist zweckmäßigerweise an die Sahneentnahme gekoppelt. Das in dem Vorratsbehälter 18 enthaltene, mit Druckluft beaufschlagte Produkt wird dann durch den Auslass 26 mit dem Magnetventil 28 und eine daran angeschlossene Verbindungsleitung (nicht dargestellt) zu einer auf den Auslauf 8 oder die Garniertülle 10 gesteckten Applikationsdüse 16, hier in Gestalt einer Ringverteilerdüse (kurz: Ringdüse) geleitet. Durch geeignet angeordnete Kanäle in der Ringdüse gelangt das Produkt von außen auf die aus der Garniertülle 10 ausströmende Schlagsahne und erzeugt so die gewünschten Dekorstreifen.

Die Figuren zeigen weitere Details der einzelnen Komponenten, die im Folgenden beschrieben werden:
Der in FIG. 2 bis 4 dargestellte Vorratsbehälter 18 für das Farb-/Geschmacksprodukt besitzt grob die Gestalt eines quaderförmigen Kastens. Selbstverständlich sind auch andere, auf das Gehäuse der Sahnemaschine 2 abgestimmte Formen möglich. Die dauerhafte Montage an der Sahnemaschine 2 erfolgt beispielsweise über rückwärtig an dem Vorratsbehälter 18 / am Gehäuse der Sahnemaschine 2 angeordnete Halteelemente. Beispielsweise können in das Gehäuse der Sahnemaschine 2 Olivenösen oder dergleichen eingebracht sein, in die der Vorratsbehälter 18 über rückwärtig angebrachte Nippel oder ähnliches eingehängt und dementsprechend bei Bedarf auch wieder demontiert werden kann. An der Vorderseite des Vorratsbehälters 18 ist ein Schauglas 30 vorgesehen, um den Füllstand des Produktes schnell von außen überprüfen zu können. Alternativ oder zusätzlich kann eine elektronische Füllstandsanzeige / Füllstandsüberwachung mit geeigneten Sensoren vorgesehen sein.

Ein vorzugsweise in einer Bohrung an der Oberseite des Gehäuses des Vorratsbehälters 18 angeordneter Anschlussstutzen (Druckluftanschluss 24) dient zum Anschluss einer am anderen Ende mit einer geeigneten Druckluftquelle verbundenen Druckluftleitung. Als Druckluftquelle dient vorzugsweise ein Kompressor. Insbesondere kann nach Art einer Mehrfachnutzung ein zur Druckbeaufschlagung der Sahne in der Sahnemaschine 2 eingesetzter Kompressor auch zu diesem Zweck verwendet werden. Alternativ kann ein separater Kompressor zum Einsatz kommen, der beispielsweise in die Garniereinrichtung 12 integriert sein kann.

Anstelle eines Transports des Farb-/Geschmacksproduktes mit Hilfe von Druckluft können auch andere Transportmittel bzw. Fördervorrichtungen wie etwa eine Pumpe vorgesehen sein. Diese alternative Variante wird weiter unten noch detaillierter beschrieben.

Die Auslassbohrung / der Auslass 26 für das Produkt ist vorzugsweise an der Unterseite des Vorratsbehälters 18 angeordnet. Ein in den Auslass 26 eingesetzter Anschlussstutzen 32 dient zum Anschluss des Magnetventils 28, welches den Abfluss des Produktes aus dem Vorratsbehälter 18 steuert. In alternativer Ausgestaltung kann das Magnetventil 28 baulich in den Auslass 26 / in den Vorratsbehälter 18 integriert sein. Die hier dargestellte Ausführung besitzt jedoch den Vorteil der guten Zugänglichkeit und leichten Auswechselbarkeit des Magnetventils 28 im Falle eines Defekts.

Bei der Pumpenvariante befindet sich das Magnetventil 28 vorteilhafterweise weiter stromabwärts in dem zur Applikationsdüse 16 führenden Schlauch, bevorzugt kurz vor der Applikationsdüse 16. Insbesondere kann das Magnetventil 28 dann innerhalb des Gehäuses der Sahnemaschine 2 angeordnet sein. Auf diese Weise wird ein Nachtropfen des Produktes beim Abschalten der Pumpe verhindert, welches andernfalls infolge eines eventuell im Schlauchsystem vorhandenen Restdrucks möglich wäre.

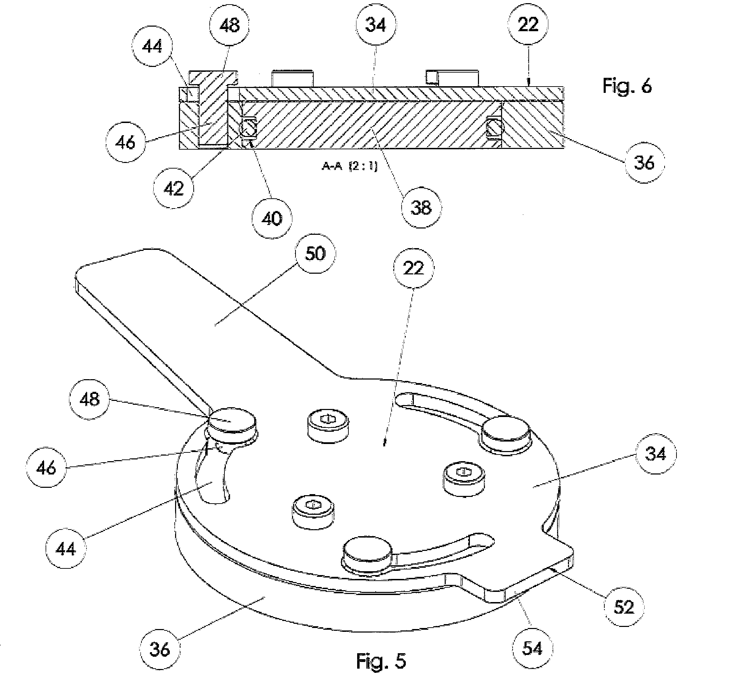

Der zum Verschluss der Nachfüllöffnung 20 an Oberseite des Vorratsbehälters 18 angeordnete Verschlussdeckel 22 ist in FIG. 5 in einer perspektivischen Ansicht von schräg oben dargestellt. Der Verschlussdeckel 22 weist eine Auflagescheibe 34 (= äußere Deckelscheibe) auf, welche in der Schließstellung auf einer ringförmigen Randeinfassung 36 der kreisförmigen Ausnehmung des Vorratsbehälters 18 aufliegt. Eine fest mit der Auflagescheibe 34 verbundene Füllscheibe 38 (= innere Deckelscheibe) greift gemäß der Querschnittsdarstellung in FIG. 6 passgenau in die Randeinfassung 36 ein. Eine in einer Umfangsnut 40 der Füllscheibe 38 angeordnete O-Ring-Dichtung 42 dichtet die Füllscheibe 38 gegenüber der Randeinfassung 36 ab und gewährleistet den dichten Verschluss der Nachfüllöffnung 20, solange der Verschlussdeckel 22 in Schließstellung niedergehalten / verriegelt wird.

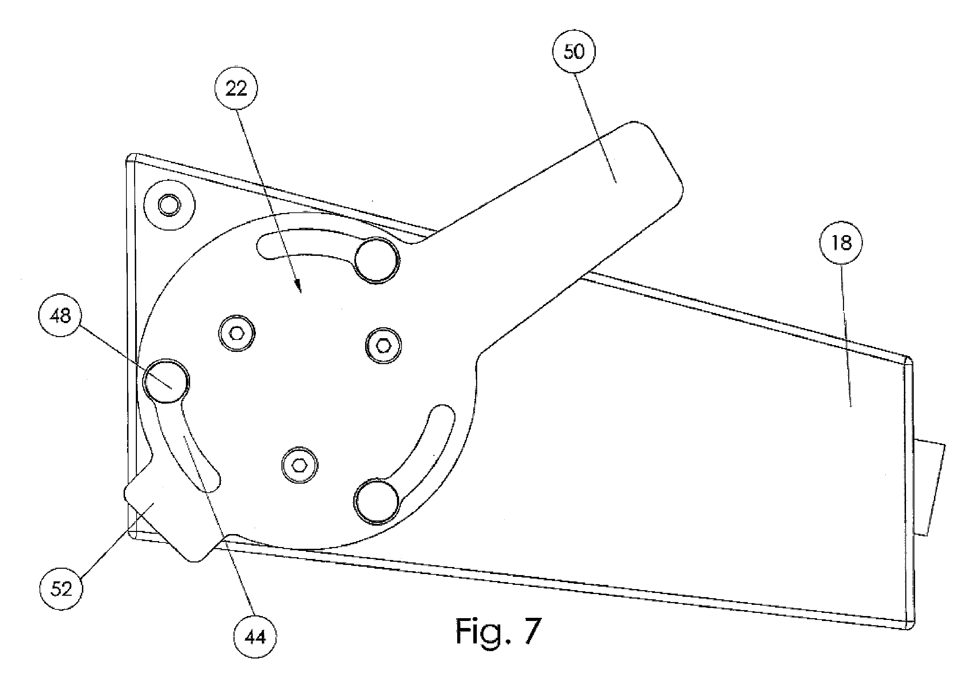

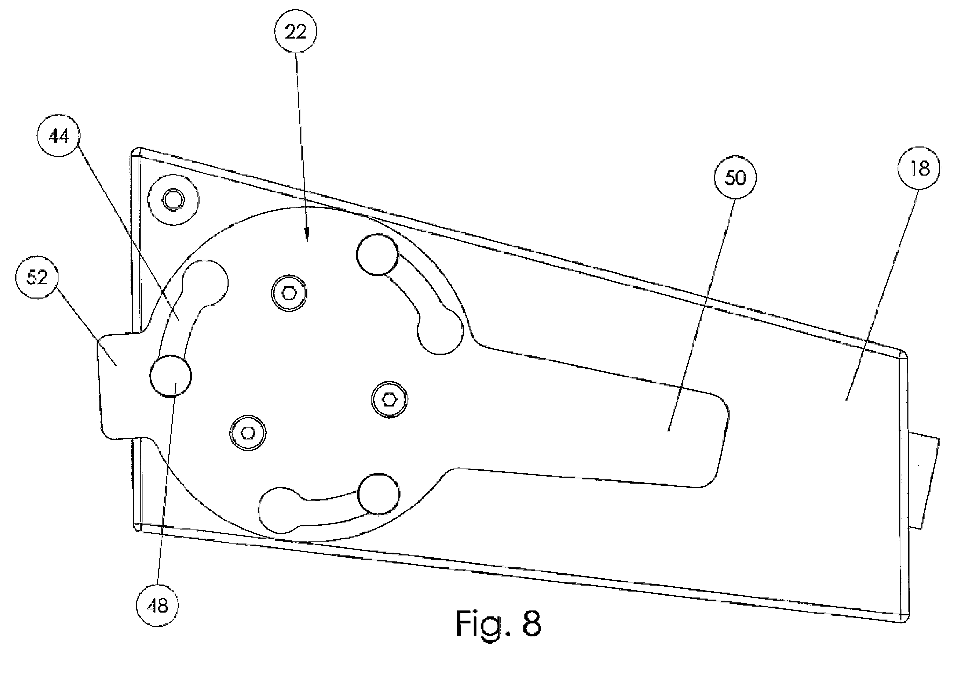

Die lösbare Verbindung des Verschlussdeckels 22 mit dem Produktbehälter / Vorratsbehälter 18 ist durch einen Bajonettverschluss realisiert. Die Auflagescheibe 34 ist dazu mit geeignet geformten, im Wesentlichen kreisbogenförmigen und sich an einem der beiden Enden erweiternden Bajonettnuten 44 oder -schlitzen versehen, in die nach oben aus der Randeinfassung 36 hervorstehende Bajonettstifte 46 eingreifen. Die Platzierung und Fixierung des Verschlussdeckels 22 auf der zugehörigen Aufnahme erfolgt wie bei Bajonettverschlüssen üblich durch eine Steck-Dreh-Bewegung. Am oberen Ende der Bajonettstifte 46 angeformte Halteköpfe 48 stehen in der Schließstellung seitlich über die Bajonettnuten 44 der Auflagescheibe 34 über und halten den Verschlussdeckel 22 nieder. Ein an die Auflagescheibe 34 angeformter oder mit ihr fest verbundener Griff 50 ermöglicht die einfache Betätigung des Bajonettverschlusses ohne Werkzeug. FIG. 7 zeigt den entriegelten Zustand, FIG. 8 den verriegelten Zustand.

Weiterhin ist an dem Verschlussdeckel 22 ein Betätigungselement 52 für einen Positionsschalter angebracht, hier beispielsweise in Gestalt eines seitlich hervorstehenden Vorsprungs 54 ("Lasche") an der Auflagescheibe 34 oder am Griff 50. Im Verriegelungszustand wird dadurch ein elektrischer Stromkreis geschlossen, der den zugehörigen Kompressor in Gang setzt und damit den Innenraum des Vorratsbehälters 18 unter Druck setzt. Beim Entriegeln des Verschlussdeckels 22 wird der Kompressor automatisch gestoppt. Vorteilhafterweise wird zugleich ein in den Verschlussdeckel 22 und/oder in seinen Sitz integriertes Entlüftungsventil geöffnet, so dass der im Vorratsbehälter 18 vorhandene Überdruck sanft abgebaut wird, bevor der Verschlussdeckel 22 vom Sitz abgehoben wird.

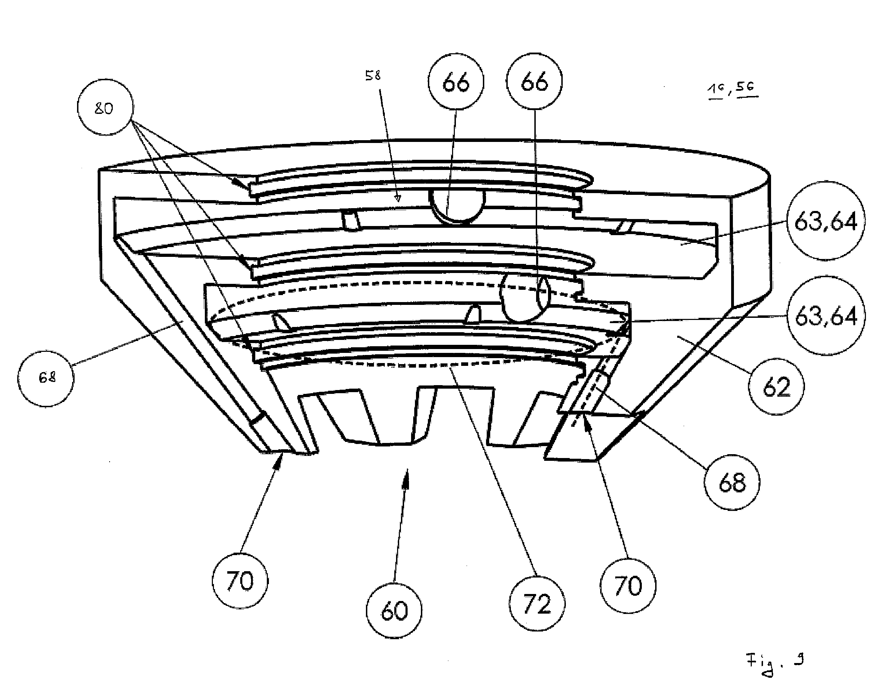

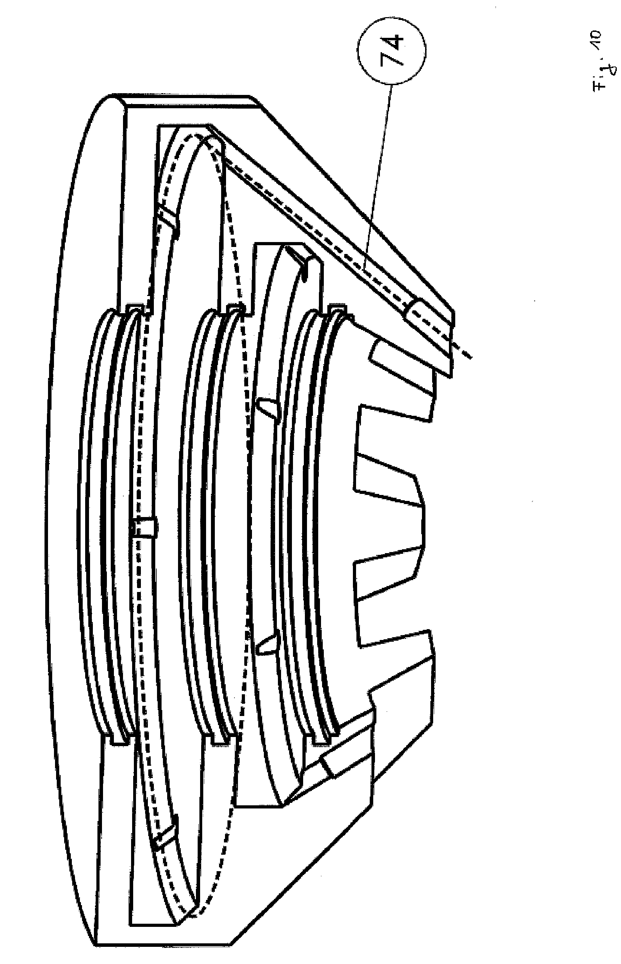

FIG. 9 und FIG. 10 zeigen beide einen Längsschnitt durch die als Ringdüse 56 ausgebildete Applikationsdüse 16, mittels derer das aus dem Vorratsbehälter 18 geförderte Farb-/Geschmacksprodukt auf die Schlagsahne aufgetragen wird, welche üblicherweise zeitgleich aus der Garniertülle 10 am Auslauf 8 der Sahnemaschine 2 strömt. Die Ringdüse 56 besitzt im Wesentlichen die Gestalt eines Hohlkegels, mithin eine (sich von oben nach unten verjüngende) kegelförmige Außenkontur mit einer zentralen Längsbohrung 58 im Kegelkörper von im Wesentlichen zylindrischer, sich nach unten hin zum Auslassende 60 leicht verjüngender Form. Anstelle eines Hohlkegels kann auch ein Hohlzylinder oder eine Kombination aus beiden vorgesehen sein.

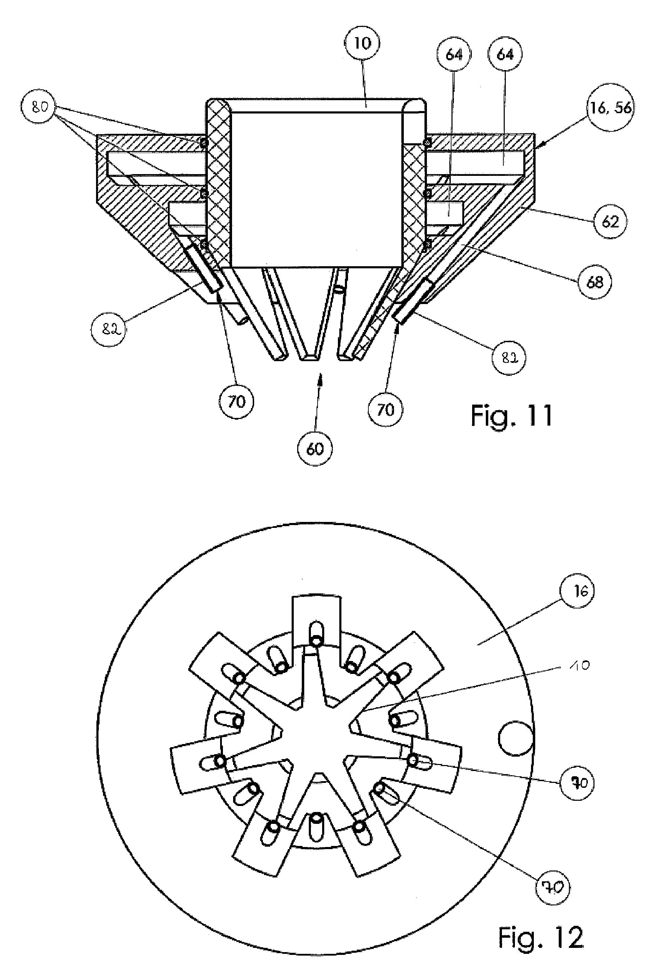

In die Wand 62 des Hohlkegels sind zwei axial voneinander beabstandete Umfangsnuten 63 von der Innenseite her eingebracht, die im Montageendzustand umlaufende Ringkanäle 64 ausbilden. Dieser Zustand, bei dem die Ringdüse 56 von unten her auf die Garniertülle 10 aufgeschoben / aufgesteckt ist und sie umgreift, ist in FIG. 11 dargestellt. Wie man sieht, ist die Form der zentralen Längsbohrung 58 in der Ringdüse 56 passgenau auf die Außenkontur der Garniertülle 10 abgestimmt, so dass sich in der Anschlagsposition ein dichter Klemmsitz ergibt. Dabei bildet die Außenseite der Garniertülle 10 die innere Begrenzung der Ringkanäle 64, wobei die Ringkanäle 64 durch die exakte Passung zwischen Garniertülle 10 und Ringdüse 56 gegeneinander abgedichtet sind.

Ein separater O-Ring zur Abdichtung ist somit nicht unbedingt notwendig, kann aber in einer vorteilhaften Ausgestaltung zur Verbesserung der Dichtigkeit vorhanden sein, insbesondere bei nicht so fester Klemmpassung. In FIG. 9 sind beispielsweise drei in Axialrichtung voneinander beabstandete O-Ringe 80 vorgesehen, die in innenliegende Umfangnuten im Hohlkegel an der Berandung der Ringkanäle 64 eingebracht sind. Jeder der beiden Ringkanäle 64 wird also sowohl nach oben als auch nach unten abgedichtet, so dass dort ein Austritt / Übertritt des jeweiligen Produktes sicher verhindert wird.

In einer nicht dargestellten Abwandlung nach Art einer integralen Bauweise kann die Garniertülle 10 auch in die Applikationsdüse 16 integriert sein, etwa als einteiliges Spritzgussteil, wodurch die bei der zweiteiligen Ausführung bestehende Abdichtungsproblematik entfällt.

Jeder Ringkanal 64 kommuniziert mit einer radialen Anschlussbohrung 66, an die eine zum Auslass des Magnetventils 28 der zugeordneten Vorratseinheit 14 führende Verbindungsleitung angeschlossen ist. Von dem jeweiligen Ringkanal 64 zweigen nach unten zum Auslassende 60 hin ein oder mehrere innerhalb der Wand 62 des Hohlkegels verlaufende Auslasskanäle ab. Die auch als Garnierkanäle 68 bezeichneten Auslasskanäle münden endseitig in Auslassöffnungen 70, die vorzugsweise schräg auf die aus der Garniertülle 10 ausströmende Schlagsahne gerichtet sind. Um das Topping besser auf der Sahne zu positionieren, sind vorteilhafterweise die Auslassöffnungen 70 durch Garnierhülsen 82 gebildet, die in die offenen Enden der Garnierkanäle 68 gesteckt bzw. eingepresst sind. Durch die variable Länge und den variablen Innendurchmesser der austauschbaren Garnierhülsen 82 kann eine einfache Adaption an unterschiedliche Anforderungen erfolgen.

Die Anschlussbohrung 66 bildet somit den Zulauf für das zu applizierende Produkt, der Ringkanal 64 wirkt als Verteiler auf die Garnierkanäle 68, und die Garnierkanäle 68 bewerkstelligen zusammen mit den Garnierhülsen 82 den Auftrag des Produktes auf die Schlagsahne. Der Fluss des Produktes durch das Kanalsystem ist für den unteren Ringkanal 64 in FIG. 9 durch eine Flusslinie 72 veranschaulicht, in FIG. 10 ist die entsprechende Flusslinie 74 für den oberen Ringkanal 64 dargestellt. Zweckmäßigerweise zweigen von jedem Ringkanal 64 mehrere Garnierkanäle 68 in strömungsmäßiger Parallelschaltung ab, vorzugsweise gleichmäßig über den Umfang verteilt. Bei dem dargestellten Beispiel sind es sieben Garnierkanäle 68 für den oberen Ringkanal 64 und ebenso viele für den unteren Ringkanal 64, und zwar in alternierender Anordnung, wie man der Draufsicht auf die Unterseite der Düsenanordnung in FIG. 12 entnimmt.

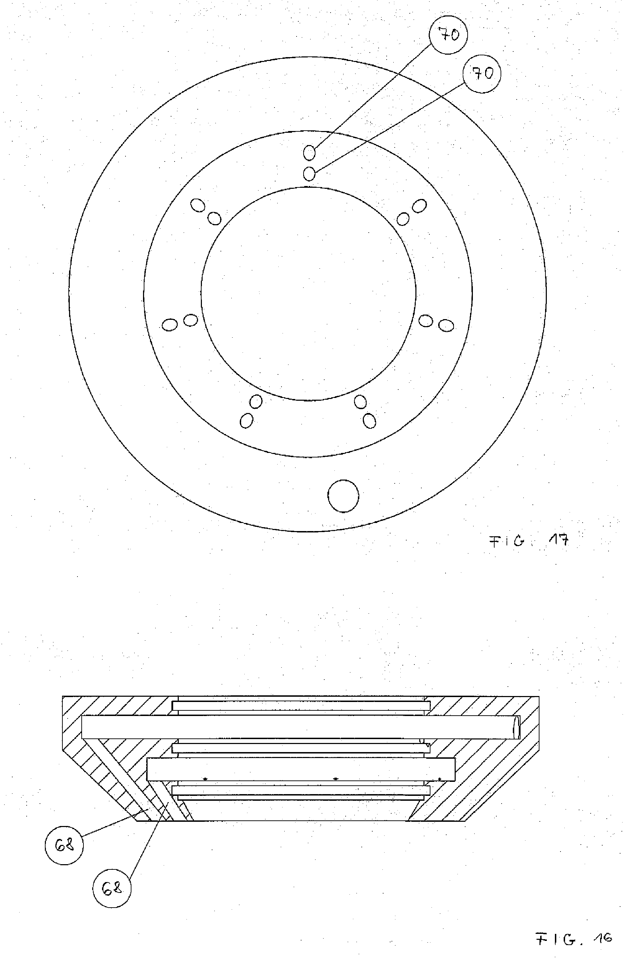

Eine alternative Anordnung der Garnierkanäle 68 innerhalb der Ringdüse 56 und der entsprechenden Auslassöffnungen 70 ist in FIG. 16 und FIG. 17 dargestellt. Der wesentliche Unterschied zu der zuvor beschriebenen Variante besteht darin, dass hier jeweils ein vom ersten Ringkanal 64 abzweigender Garnierkanal 68 für das erste Topping und ein vom zweiten Ringkanal 64 abzweigender Garnierkanal 68 für das zweite Topping in Radialrichtung betrachtet mit geringem Abstand hintereinander liegen. Dadurch wird das zweite Topping etwas weiter außen als das erste Topping an gleicher Stelle des Umfangs auf die Sahne aufgetragen. Mehrere dieser Paare, hier beispielsweise sieben, sind gleichmäßig über den Umfang hinweg verteilt.

Die Anzahl der Ringkanäle 64 in der Ringdüse 56 korrespondiert zu der Anzahl der Vorratsbehälter 18 und damit zur maximal möglichen Anzahl verschiedenartiger Produkte, die auf die Schlagsahne aufgetragen werden können. Die Anzahl der Garnierkanäle 68 pro Ringkanal 64 und ihre Anordnung in Umfangsrichtung gesehen sind innerhalb des zur Verfügung stehenden Raumes in der Wand 62 frei wählbar und werden vor allem durch ästhetische Zielsetzungen in Bezug auf das Streifendekor bestimmt. Da die Ringdüse 56 bevorzugt einfach auf die Garniertülle 10 gesteckt wird, ist sie leicht auswechselbar. Durch Wechsel der Ringdüse 56, das heißt durch Austausch gegen einen anderen Typ, kann somit das Streifenmuster variiert werden.

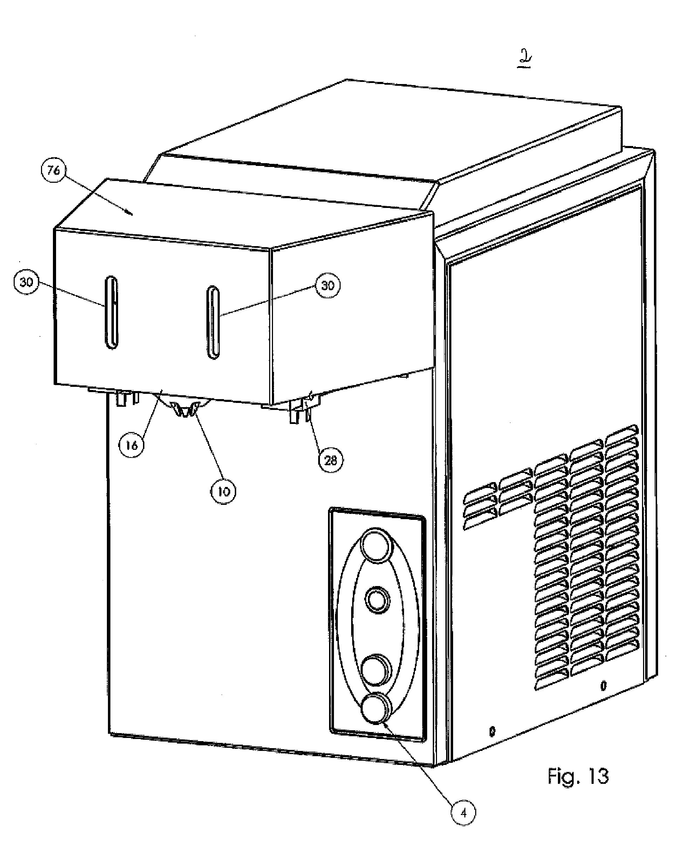

Vorteilhafterweise ist eine Abdeckung 76 für die komplette Garniereinrichtung 12 oder für Teile davon vorgesehen, natürlich mit Aussparungen an der Unterseite für die Auslasskomponenten (Garniertülle 10, Applikationsdüse 16) und ggf. die Magnetventile 28. Eine mögliche Variante, die die beiden Vorratsbehälter 18 abdeckt und mittels geeigneter Ausnehmungen die Sicht auf die beiden Schaugläser 30 ermöglicht, ist in FIG. 13 dargestellt.

Eine bevorzugt in die Sahnemaschine 2 integrierte elektronische Steuerung ermöglicht eine aufeinander abgestimmte Ansteuerung des Magnetventils 6 für den Sahnefluss und der Magnetventile 28 für den Fluss der Farb-/ Geschmacksprodukte in Abhängigkeit von den Benutzereingaben am Bedienfeld 4. Bedarfsweise ist es möglich, nur Schlagsahne zu entnehmen, oder nur eines der Farb/Geschmacks-produkte oder gemeinsam beliebige Kombinationen davon. Beispielsweise kann bei dem eingangs erwähnten Beispiel Schlagsahne mit einem Schokoladen-Topping oder mit einem Erdbeer-Topping oder mit beiden entnommen werden, oder alternativ Schlagsahne ohne Topping oder nur das jeweilige Topping-Produkt oder beide.

Vorteilhafterweise ermöglicht die Steuerung auch eine Nachregelung der voreingestellten Kompressorleistung bzw. des für den Stofftransport vorgesehenen Luftdrucks, so dass eine Anpassung an unterschiedliche Viskositäten der Farb-/ Geschmacksprodukte erfolgen kann. Bei der Pumpenvariante erfolgt die Anpassung bevorzugt über eine Drehzahlsteuerung der Pumpe und/oder einstellbare Regelventile oder Druckminderer im Schlauch-/ Leitungssystem.

Die Garniereinrichtung 12 kann von Grund auf in die Sahnemaschine 2 integriert sein. Es ist aber auch möglich, sie als Nachrüst-Set für bestehende Maschinen anzubieten.

Abschließend noch eine kurze Funktionsbeschreibung aus Sicht des Benutzers:
1. Produkt in den jeweiligen Vorratsbehälter 18 einfüllen und diesen mit dem zugehörigen Verschlussdeckel 22 durch Drehen verriegeln (Bajonettverschluss). Dabei dichtet der O-Ring 42 am Verschlussdeckel 22 den Vorratsbehälter 18 ab, so dass sich der Druck aufbauen kann, der zum Fördern des Produktes benötigt wird. Durch Verriegeln des Verschlussdeckels 22 wird mit Hilfe des Betätigungselementes 52 ein Kontakt ausgelöst, der einen Kompressor / eine Pumpe einschaltet und auf seinen gewünschten Druck, welcher vorher eingestellt wurde, hochfährt. Das Produkt ist nun mit Druck beaufschlagt und wird durch das Magnetventil 28 zurückgehalten.
2. Bei Betätigung der Bedienungstaste für das jeweilige Produkt öffnet sich das zugehörige Magnetventil 28 und das unter Druck befindliche Produkt wird der Ringdüse 56 über einen Schlauch / ein Rohr zugeführt. Über den Ringkanal 64 gelangt das Produkt an jeden Garnierkanal 68 und tritt dort am unteren Ende des Kanals aus. Zeitgleich wird auch die Schlagsahne gefördert und das Produkt strömt aus dem Garnierkanal 68 und dekoriert die geschlagene Sahne. Ist die voreingestellte Zeitspanne für eine Portion abgelaufen (alternativ ist auch Handsteuerung möglich), stoppt die Sahnepumpe und das Magnetventil 28 des zulaufenden Produktes verschließt sich - ebenso das Magnetventil 6 am Auslauf 8 für die Schlagsahne, wodurch ein Nachtropfen verhindert wird. Es ist auch möglich, Schlagsahne und Farb-/Geschmacksprodukt separat, also einzeln, zu entnehmen.
3. Der Verschlussdeckel 22 am Produktbehälter 18 kann durch den Bajonettverschluss entriegelt werden. Dadurch wird der Schalter für den Kompressor durch das Betätigungselement 52 nicht mehr betätigt und schaltet den Kompressor ab. Gleichzeitig wird ein Entlüftungsventil betätigt, das den Behälter drucklos macht. Damit kann der Verschlussdeckel 22 mit dem Griff 50 sicher entfernt werden und ein Nachfüllen des Produktes ist möglich.

Wie bereits weiter oben erwähnt, kann anstelle einer Förderung des Farb/Geschmacksproduktes mit Hilfe von Druckluft, welche durch einen Kompressor verdichtet und als Treibmedium in den jeweiligen Vorratsbehälter 18 eingeleitet wird, ein Transport des Farb-/Geschmacksproduktes mit Hilfe einer (Saug-) Pumpe vorgesehen sein. Die vorzugsweise elektrisch angetriebene Pumpe 90 ist dazu in die Verbindungsleitung / den Verbindungsschlauch 92 zwischen dem Vorratsbehälter 18 und der Applikationsdüse 16 geschaltet. Die Verbindungsleitung ist bevorzugt an der tiefsten Stelle des Vorratsbehälters 18 an selbigen angeschlossen, um das Produkt vollständig entnehmen zu können. Der im Zusammenhang mit der Druckluft-Variante beschriebene Kompressor und die zugehörigen Druckluftleitungen und -anschlüsse können bei dieser Pumpen-Variante entfallen. Der Vorratsbehälter 18 muss dann auch nicht unbedingt druckdicht verschließbar sein; normale Dichtigkeit in Bezug auf das Farb-/Geschmacksprodukt bei Umgebungsdruck genügt. Durch den Entfall des Kompressors entfällt auch dessen Ansteuerung durch das Betätigungselement 52 am Verschlussdeckel 22. Das Betätigungselement 52 selber kann aber weiterhin vorhanden sein, um beispielsweise im Zusammenspiel mit einem zugehörigen Taster den Verriegelungszustand anzuzeigen (Positions- oder Endlagenschalter). Alternativ kann auch ein einfacher, oben auf der Nachfüllöffnung 20 des Vorratsbehälters 18 aufliegender Verschlussdeckel 22 ohne aufwendige Abdichtung und ggf. auch ohne Griff vorgesehen sein. Die Betätigung der Pumpe 90 für das Farb-/Geschmacksprodukt erfolgt zweckmäßigerweise in Abstimmung auf die Betätigung des Magnetventils 28 durch oben erwähnte elektronische Steuerung.

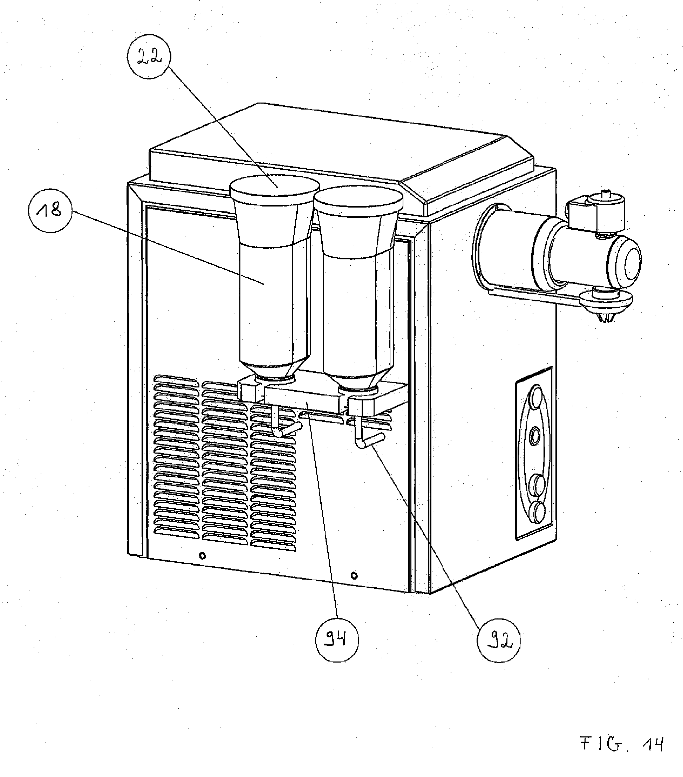

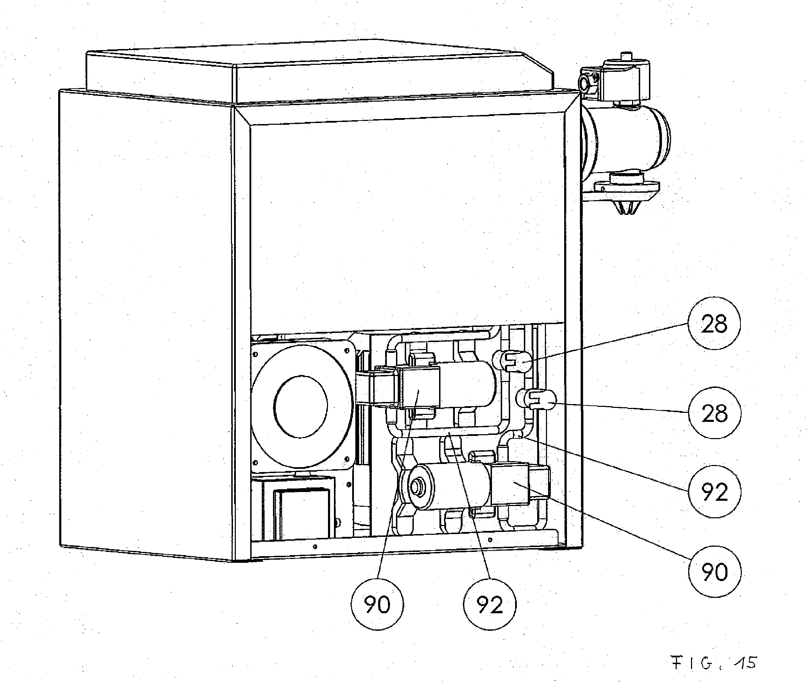

FIG. 14 zeigt eine schräge Vorder-/ Seitenansicht einer Sahnemaschine 2 in der Pumpen-Variante, und FIG. 15 zeigt einen Blick auf die Seite mit teilweise abgenommener Verkleidung und mit abgenommenen Vorratsbehältern 18.

Die Vorratsbehälter 18 sind hier konstruktiv einfacher gehalten als in der Druckluft-Variante, da keine Druckluftzufuhr und keine Mittel zur Überdruckabsicherung vorhanden sind. Wie bereits erwähnt, genügt jeweils ein einfacher, oben aufliegender Verschlussdeckel 22. Die Vorratsbehälter 18 sind hier seitlich außenliegend an einer seitlich vom Gehäuse abstehenden Montageplatte 94 angebracht, beispielsweise indem sie jeweils am unteren Ende / in der jeweiligen Bodenregion in zugeordnete Ausnehmungen in der Montageplatte 94 eingesetzt oder geklemmt sind. Sie lassen sich vorteilhafterweise bedarfsweise abnehmen. Alternativ können die Vorratsbehälter 18 wie im Zusammenhang mit der Kompressorvariante beschrieben auch hier an der Vorderseite des Gehäuses (neben der Applikationsdüse 16) oder an anderer geeigneter Stelle angeordnet sein, wozu die Leitungsführung entsprechend anzupassen ist.

Unten an den Vorratsbehältern 18 sind Öffnungen / Anschlüsse für die Saug- oder Verbindungsschläuche 92 vorgesehen, über die das jeweilige Farb-/ Geschmacksprodukt zu der Saugseite der jeweils zugeordneten elektrischen Pumpe 90 gelangt, die beispielsweise innerhalb des Gehäuses angeordnet ist. Für jeden der Vorratsbehälter 18 ist eine eigene, individuell ansteuerbare Pumpe 90 vorhanden, ebenso ein zugeordnetes Magnetventil 28. Von der Druckseite der jeweiligen Pumpe 90 führt ein Schlauch zu dem zugeordneten Magnetventil 28 und von dort schließlich zu dem Einlass / der Anschlussbohrung 66 des zugehörigen Ringkanals der Applikationsdüse 16.

**Bezugszeichenliste**

| | | | |
|---|---|---|---|
| 2 | Sahnemaschine | 63 | Umfangsnut |
| 4 | Bedienfeld | 64 | Ringkanal |
| 6 | Magnetventil | 66 | Anschlussbohrung |
| 8 | Auslauf | 68 | Garnierkanal |
| 10 | Garniertülle | 70 | Auslassöffnung |
| 12 | Garniereinrichtung | 72 | Flusslinie |
| 14 | Vorratseinheit | 74 | Flusslinie |
| 16 | Applikationsdüse | 76 | Abdeckung |
| 18 | Vorratsbehälter | 80 | O-Ring |
| 20 | Nachfüllöffnung | 82 | Garnierhülse |
| 22 | Verschlussdeckel | 90 | Pumpe |
| 24 | Druckluftanschluss | 92 | Verbindungsschlauch |
| 26 | Auslass | 94 | Montageplatte |
| 28 | Magnetventil | | |
| 30 | Schauglas | | |
| 32 | Anschlussstutzen | | |
| 34 | Auflagescheibe | | |
| 36 | Randeinfassung | | |
| 38 | Füllscheibe | | |
| 40 | Umfangsnut | | |
| 42 | O-Ring-Dichtung | | |
| 44 | Bajonettnut | | |
| 46 | Bajonettstift | | |
| 48 | Haltekopf | | |
| 50 | Griff | | |
| 52 | Betätigungselement | | |
| 54 | Vorsprung | | |
| 56 | Ringdüse | | |
| 58 | Längsbohrung | | |
| 60 | Auslassende | | |
| 62 | Wand | | |

## Patentansprüche

1. Sahnemaschine (2) mit einem Auslauf (8) für Schlagsahne und mit einer Garniereinrichtung (12) zum Aufbringen mindestens eines Farb-/ Geschmacksproduktes auf die Schlagsahne.

2. Sahnemaschine (2) nach Anspruch 1, wobei die Garniereinrichtung (12) mindestens einen Vorratsbehälter (18) für ein Farb-/ Geschmacksprodukt, Mittel zum Transport des Farb-/ Geschmacksproduktes und eine am Auslauf (8) angeordnete Applikationsdüse (16) für das Farb-/ Geschmacksprodukt aufweist.

3. Sahnemaschine (2) nach Anspruch 2, wobei am Auslauf (8) eine Garniertülle (10) für die Schlagsahne angeordnet ist und die Applikationsdüse (16) auf die Garniertülle (10) gesteckt ist.

4. Sahnemaschine (2) nach Anspruch 3, wobei die Applikationsdüse (16) die Garniertülle (10) mit einer mechanischen Verbindung, insbesondere mit Klemmpassung umgreift.

5. Sahnemaschine (2) nach Anspruch 3 oder 4, wobei die Applikationsdüse (16) gegenüber der Garniertülle (10) durch eine Anzahl von O-Ringen (80) abgedichtet ist.

6. Sahnemaschine (2) nach einem der Ansprüche 2 bis 5, wobei die Applikationsdüse (16) mindestens einen Ringkanal (64) aufweist, von dem mehrere Garnierkanäle (68) abzweigen.

7. Sahnemaschine (2) nach Anspruch 6, wobei der Ringkanal (64) als innenliegende Umfangsnut (63) in einem Hohlkegel ausgebildet ist und die Garnierkanäle (68) innerhalb der Wand (62) des Hohlkegels verlaufen.

8. Sahnemaschine (2) nach einem der Ansprüche 2 bis 7, wobei die Mittel zum Transport des Farb-/ Geschmacksproduktes einen Kompressor umfassen, der das Farb-/ Geschmacksprodukt im Vorratsbehälter (18) mit Druckluft beaufschlagt.

9. Sahnemaschine nach Anspruch 8, wobei der Vorratsbehälter (18) eine Nachfüllöffnung (20) für das Farb-/ Geschmacksprodukt und einen druckdicht verschließbaren Verschlussdeckel (22) aufweist, der sich mit Hilfe eines Bajonettverschlusses verriegeln / entriegeln lässt.

10. Sahnemaschine (2) nach Anspruch 9, wobei der Verschlussdeckel (22) ein Betätigungselement (52) für einen Positionsschalter aufweist, der in Abhängigkeit von der Stellung des Verschlussdeckels (22) den Kompressor ansteuert.

11. Sahnemaschine (2) nach einem der Ansprüche 2 bis 7, wobei die Mittel zum Transport des Farb-/ Geschmacksproduktes eine Pumpe (90) umfassen, die das Farb-/ Geschmacksprodukt aus dem Vorratsbehälter (18) ansaugt.

12. Sahnemaschine (2) nach einem der Ansprüche 2 bis 11, wobei die Garniereinrichtung (12) ein Magnetventil (28) aufweist, das den Fluss des Farb-/ Geschmacksproduktes durch die Applikationsdüse (16) regelt.

13. Sahnemaschine (2) nach Anspruch 12 mit einem Magnetventil (6), das den Fluss der Schlagsahne durch den Auslauf (8) regelt, und mit einer elektronischen Steuerung, die dieses Magnetventil (6) und das Magnetventil (28) der Garniereinrichtung (12) in koordinierter Weise ansteuert.

14. Sahnemaschine (2) nach einem der Ansprüche 2 bis 13 mit mehreren Vorratsbehältern (18) für verschiedene Farb-/ Geschmacksprodukte, die strömungsmäßig mit einer gemeinsamen Applikationsdüse (16) verbunden sind.

15. Nachrüstsatz für eine Schlagsahne abgebende Sahnemaschine (2), umfassend eine Garniereinrichtung (12) zum Aufbringen mindestens eines Farb-/ Geschmacksproduktes auf die Schlagsahne.
